# EUROPEAN PATENT APPLICATION

(11) **EP 3 348 876 A1**
(43) Date of publication of application: **18.07.2018**
(21) Application number: 16844271.3
(22) Date of filing: 01.09.2016
(51) Int. Cl.: F16H 61/12, F16H 59/42, F16H 61/66, F16H 61/662

(54) **CONTINUOUSLY VARIABLE TRANSMISSION AND MALFUNCTION DETERMINATION METHOD THEREFOR**

(30) Priority: 11.09.2015 JP 2015179520
(71) Applicant: NISSAN MOTOR CO., LTD., Yokohama-shi, Kanagawa 221-0023 (JP)
(72) Inventor: SUDO, Tatsuya, Fuji-shi Shizuoka 417-8585 (JP); ITOU, Youji, Fuji-shi Shizuoka 417-8585 (JP); ABE, Kosuke, Fuji-shi Shizuoka 417-8585 (JP)
(74) Representative: Hoefer & Partner Patentanwälte mbB
(86) International application number: PCT/JP2016/075635
(87) International publication number: WO 2017/043410

(57) **Abstract**

A transmission controller is configured such that if an input rotation speed sensor is determined to have a failure, the transmission controller executes a fail-safe control and inhibits a failure determination of a secondary pressure solenoid valve on the basis of a difference between a secondary instruction pressure and a detected value by a secondary pressure sensor. The fail-safe control is configured to set the secondary instruction pressure to be a predetermined high pressure.

## Description

### TECHNICAL FIELD

The present invention relates to a technique that determines a failure of such as a sensor and a solenoid valve in a belt continuously variable transmission (hereinafter referred to as "CVT").

### BACKGROUND ART

A CVT is constituted of a primary pulley and a secondary pulley whose groove widths are changeable and a belt stretched around between the primary pulley and the secondary pulley. Changing the groove widths of the respective pulleys changes contact radiuses between the belt and the respective pulleys, changing a speed ratio steplessly.

The groove widths of the primary pulley and the secondary pulley are changed by primary pressure and secondary pressure supplied to respective oil chambers of these pulleys. By these hydraulic pressures, the belt is sandwiched by the primary pulley and by the secondary pulley.

If a solenoid valve, which adjusts these hydraulic pressures, fails, a difference between an instruction pressure and an actual pressure becomes large; therefore, whether a failure occurs or not can be determined on the basis of the difference between the instruction pressure and the actual pressure.

Meanwhile, JP2000-55182A discloses an automatic transmission that determines whether an input rotation speed sensor of the transmission has a failure or not and when the automatic transmission determines that the input rotation speed sensor has a failure, the automatic transmission executes a predetermined fail-safe control (for example, a restriction of a speed ratio range).

With the CVT, as a fail-safe control during a failure of the input rotation speed sensor, a control that increases a secondary pressure so as not to cause a belt slip is preferable. For example, while an instruction pressure to a secondary pressure solenoid valve to adjust a secondary pressure is increased, an instruction value to a primary pressure solenoid valve is set to a value according to a vehicle speed. This ensures shifting the CVT according to the vehicle speed while preventing the belt slip.

### SUMMARY OF INVENTION

However, if the above-mentioned fail-safe control is executed in a CVT, when a rotation speed of an engine is low, a discharge amount of an oil pump driven by the engine decreases. This causes an insufficient amount of oil supplied to a secondary pulley, and there may be a case where a secondary pressure does not rise up to an instruction pressure.

This causes a deviation between the instruction value and actual pressure and when the determination is performed on a secondary pressure solenoid valve on the basis of this difference, although the secondary pressure solenoid valve does not have a failure, the secondary pressure solenoid valve is determined to have a failure. In addition to the failure of the input rotation speed sensor, when the secondary pressure solenoid valve is also determined to have a failure, it is determined that a failure occurs at a plurality of sites, and a fail-safe control for double failure is executed.

For example, with a CVT with a sub-transmission mechanism, the fail-safe control for double failure is a control that fixes a gear position of the sub-transmission mechanism to a second speed and performs torque down of the engine. This control aims to safely evacuate a vehicle to a safe location. The execution of this control largely affects power performance of the vehicle; therefore, the execution of such control on the basis of an erroneous determination result is not preferable in some cases.

The present invention has been made in view of such technical problem, and it is an object of the present invention to prevent an erroneous determination that a secondary pressure solenoid valve has a failure while the secondary pressure solenoid valve does not have a failure in the case where an input rotation speed sensor is determined to have a failure.

According to an aspect of the present invention, a belt continuously variable transmission including a secondary pressure regulating valve configured to adjust a secondary pressure supplied to a secondary pulley to be a secondary instruction pressure; a secondary pressure sensor configured to detect the secondary pressure; an input rotation speed sensor configured to detect an input rotation speed of the belt continuously variable transmission; and a controller, is provided.

The controller is configured to determine whether the input rotation speed sensor has a failure or not on the basis of a detected value by the input rotation speed sensor; and if the input rotation speed sensor is determined to have a failure, execute a fail-safe control which sets the secondary instruction pressure to be a predetermined high pressure and inhibit a failure determination of the secondary pressure regulating valve on the basis of a difference between the secondary instruction pressure and a detected value by the secondary pressure sensor.

According to another aspect of the present invention, a failure determination method of the belt continuously variable transmission corresponding to this configuration is provided.

According to these aspects, when the input rotation speed sensor is determined to have a failure, the failure determination of the secondary pressure regulating valve is not performed; therefore, the secondary pressure regulating valve is not erroneously determined to have a failure while the secondary pressure regulating valve is normal.

### BRIEF DESCRIPTION OF DRAWINGS

FIG. 1 is an overall configuration diagram of a belt continuously variable transmission according to an embodiment of the present invention.
FIG. 2 is a partial schematic configuration diagram of a hydraulic control circuit.
FIG. 3 is a diagram describing a failure determination method of a solenoid valve.
FIG. 4 is a diagram illustrating a state of erroneous determination of a failure in the solenoid valve.
FIG. 5 is a flowchart illustrating a process content of a transmission controller.

### DESCRIPTION OF EMBODIMENTS

The following describes an embodiment of the present invention by referring to the attached drawings.

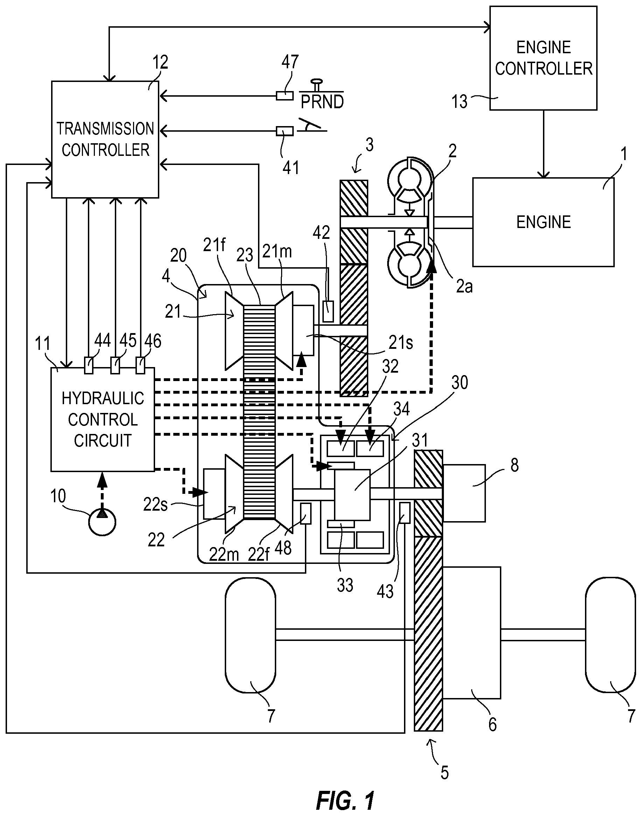

FIG. 1 is a schematic configuration diagram of a vehicle on which a belt continuously variable transmission according to the embodiment of the present invention is mounted. This vehicle includes an engine 1 as a power source. Output rotation of the engine 1 is transmitted to driving wheels 7 via a torque converter 2, a first gear train 3, a transmission 4, a second gear train 5, and a differential gear 6. A parking mechanism 8 that mechanically unrotatably locks an output shaft of the transmission 4 in parking is disposed on the second gear train 5.

The engine 1 is an internal combustion engine such as a gasoline engine and a diesel engine. An engine controller 13 controls a rotation speed and a torque of the engine.

The torque converter 2 includes a lock-up clutch 2a. When the lock-up clutch 2a is engaged, slip at the torque converter 2 disappears to ensure improving transmission efficiency of the torque converter 2.

The vehicle includes an oil pump 10 driven using a part of power of the engine 1, a hydraulic control circuit 11 that regulates hydraulic pressure from the oil pump 10 to supply the hydraulic pressure to each part of the transmission 4, and a transmission controller 12 that controls the hydraulic control circuit 11.

The transmission 4 is a continuously variable transmission including a variator 20 and a sub-transmission mechanism 30 disposed in series with respect to the variator 20. "Disposed in series" means that the variator 20 and the sub-transmission mechanism 30 are disposed in series in a power transmission path from the engine 1 up to the driving wheels 7. While in this example, the sub-transmission mechanism 30 is disposed at an output side of the variator 20, the sub-transmission mechanism 30 may be disposed at the input side.

The variator 20 is a continuously variable transmission mechanism including a primary pulley 21, a secondary pulley 22, and a belt 23 stretched between the pulleys 21 and 22. The pulleys 21 and 22 include fixed conical plates 21f and 22f, movable conical plates 21m and 22m disposed in a state where sheave surfaces are opposed to the fixed conical plates 21f and 22f to form grooves with the fixed conical plates 21f and 22f, and hydraulic cylinders 21p and 22p disposed at back surfaces of the movable conical plates 21m and 22m to axially displace the movable conical plates 21m and 22m, respectively. While a metal belt, a rubber belt, a chain belt, and a similar belt can be used as the belt 23, the belt 23 is not specifically limited to them.

Adjusting hydraulic pressure (a primary pressure Ppri and a secondary pressure Psec) supplied to the pulleys 21 and 22 changes force that the belt 23 is sandwiched by the pulleys 21 and 22 to change a torque capacity (a transmissive maximum torque) of the variator 20, and changes groove widths to change contact radiuses of the belt 23 and the respective pulleys 21 and 22, thus a speed ratio of the variator 20 steplessly changes.

The sub-transmission mechanism 30 is a transmission mechanism having two stages for forward and one stage for backward. The sub-transmission mechanism 30 includes a Ravigneaux planetary gear mechanism 31 where carriers of two planetary gears are coupled, and a plurality of friction elements (a Low brake 32, a High clutch 33, and a Rev brake 34). Adjusting hydraulic pressure supplied to the friction elements 32 to 34 to change engagement states of the friction elements 32 to 34 changes a gear position of the sub-transmission mechanism 30.

The transmission controller 12 includes a storage device including a CPU, and a RAM and a ROM, input/output interfaces, and a bus that mutually couples them.

Various signals are input to the transmission controller 12 via the input/output interfaces. The input signals include the following signals:
- A signal from an accelerator position sensor 41 that detects an accelerator position APO indicative of a manipulated variable of an accelerator pedal
- A signal from an input rotation speed sensor 42 that detects an input rotation speed (= a rotation speed of the primary pulley 21) of the transmission 4
- A signal from an output rotation speed sensor 43 that detects an output rotation speed of the transmission 4 (∞ vehicle speed)
- A signal from a line pressure sensor 44 that detects a line pressure PL
- A signal from a primary pressure sensor 45 that detects the primary pressure Ppri
- A signal from a secondary pressure sensor 46 that detects the secondary pressure Psec
- A signal from an inhibitor switch 47 that detects a position of a select lever
- A signal from a secondary rotation speed sensor 48 that detects a secondary rotation speed Nsec as a rotation speed of the secondary pulley 22
- A signal indicative of operating states (the rotation speed and the torque) of engine 1 from the engine controller 13

The storage device of the transmission controller 12 stores a shift control program of the transmission 4 and a shift map used in this shift control program. The transmission controller 12 reads the shift control program stored in the storage device to cause the CPU to execute this shift control program, thus performing a predetermined arithmetic process to a signal input via the input interface. The transmission controller 12 sets an instruction pressure of the hydraulic pressure supplied to each part of the transmission 4 and outputs the set instruction pressure to the hydraulic control circuit 11 via the input/output interfaces. The transmission controller 12 outputs an engine control signal (for example, a torque down signal) to the engine controller 13 as necessary.

The hydraulic control circuit 11 includes a plurality of flow paths and a plurality of hydraulic control valves. The hydraulic control circuit 11 controls the plurality of hydraulic control valves on the basis of the instruction pressure from the transmission controller 12 to switch a supply passage of the hydraulic pressure and generates the hydraulic pressure according to the instruction pressure to supply the hydraulic pressure to each part of the transmission 4. This performs a shift of the variator 20, the change of the gear position of the sub-transmission mechanism 30, capacity control of the respective friction elements 32 to 34, and an engagement or a disengagement of the lock-up clutch 2a.

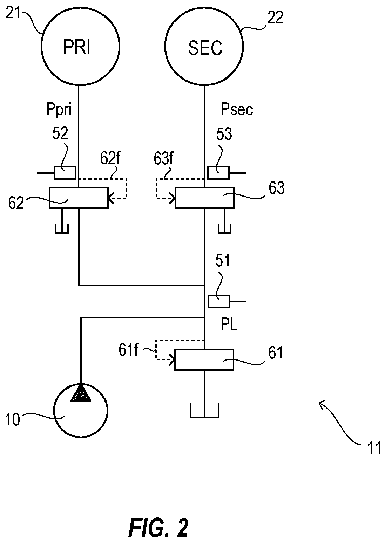

FIG. 2 illustrates a part related to the shift of the variator 20 in the hydraulic control circuit 11.

A line pressure solenoid valve 61 is a drain-pressure-regulating-solenoid valve that drains a part of a discharge pressure of the oil pump 10 and reduces the pressure to regulate the line pressure PL to a line instruction pressure.

A primary pressure solenoid valve 62 and a secondary pressure solenoid valve 63 are drain-pressure-regulating-solenoid valves that drain a part of the line pressure PL and reduce the pressure using the line pressure PL as a source pressure to regulate the primary pressure Ppri and the secondary pressure Psec to the respective primary instruction pressure and secondary instruction pressure.

The solenoid valves 61 to 63 respectively include feedback circuits 61f, 62f, and 63f that return the hydraulic pressure after the pressure regulation to the pressure regulating valves and perform the feedback control on the hydraulic pressure after the pressure regulation such that the hydraulic pressures become the instruction pressures. The instruction pressures are instructed to the solenoid valves 61 to 63 in the form of instruction currents to the solenoid valves 61 to 63. The solenoid valves 61 to 63 are normal high solenoid valves where respective output hydraulic pressures relative to input hydraulic pressures become the maximum at the instruction current of 0 mA.

With such configuration, the hydraulic control circuit 11 can independently adjust the primary pressure Ppri and the secondary pressure Psec using the line pressure PL as the source pressure.

The transmission controller 12 monitors and determines whether, for example, the sensors 41 to 48 and the solenoid valves 61 to 63 are normal or not, and when the transmission controller 12 determines that any part has a failure, the transmission controller 12 performs the fail-safe control according to the failure part.

For example, the transmission controller 12 determines whether the input rotation speed sensor 42 has a failure or not on the basis of the signal from the input rotation speed sensor 42. If the transmission controller 12 cannot obtain the signal from the input rotation speed sensor 42 or the signal has an abnormal value, it is considered that a signal line is disconnected or the sensor itself has a failure; therefore, the input rotation speed sensor 42 is determined to have a failure.

When the transmission controller 12 determines that the input rotation speed sensor 42 has a failure, the transmission controller 12 sets the instruction currents to the solenoid valves 61 and 63 to 0 mA such that the output hydraulic pressure of the solenoid valves 61 and 63 relative to the input hydraulic pressure becomes the maximum. That is, the transmission controller 12 sets the line instruction pressure and the secondary instruction pressure to the maximum pressures and increases the line pressure PL and the secondary pressure Psec, thus preventing the slip of the belt 23 due to an insufficient sandwich pressure. Regarding the primary pressure solenoid valve 62, the transmission controller 12 sets the primary instruction pressure (the instruction current) to a value according to the vehicle speed and performs the feedforward control on the primary pressure Ppri on the basis of this primary instruction pressure, thus achieving the shift according to the vehicle speed.

Regarding the solenoid valves 61 to 63, the transmission controller 12 determines whether the solenoid valves 61 to 63 have a failure or not on the basis of a difference between the instruction pressure and the detected values (the actual pressures) by sensors 51 to 53.

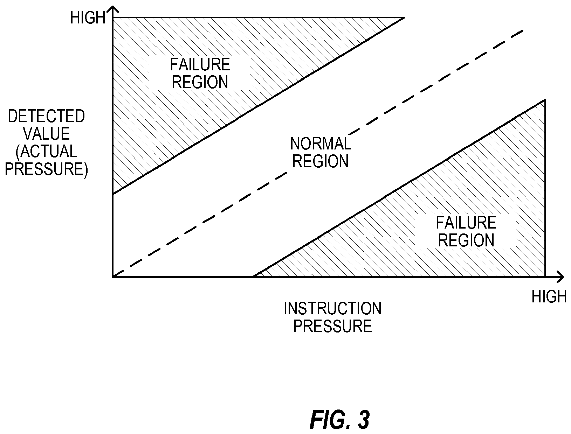

Specifically, as illustrated in FIG. 3, a region where a deviation between the instruction pressure and the detected value is large is preset as a failure region. When a combination of the instruction pressure and the detected value enters the failure region, the transmission controller 12 determines that the solenoid valve as the determination target has a failure.

When the transmission controller 12 determines that any of the solenoid valves 61 to 63 has a failure, the transmission controller 12 executes the fail-safe control according to the solenoid valve determined to have a failure. For example, when the transmission controller 12 determines that the primary pressure solenoid valve 62 has a failure, the transmission controller 12 sets the instruction current to the secondary pressure solenoid valve 63 to 0 mA, that is, cuts off the current to the secondary pressure solenoid valve 63 to increase the secondary pressure Psec.

When the transmission controller 12 determines that a double failure indicative of failures at a plurality of sites occurs, the transmission controller 12 executes a fail-safe control for double failure to safely evacuate the vehicle to a safe location. In this control, for example, the transmission controller 12 fixes the gear position of the sub-transmission mechanism 30 to the second speed and instructs the execution of the torque down of the engine 1 to the engine controller 13.

However, if the failure determination of the secondary pressure solenoid valve 63 on the basis of the difference between the secondary instruction pressure and the detected value is executed when the input rotation speed sensor 42 is determined to have a failure and the fail-safe control is executed, although the secondary pressure solenoid valve 63 does not have a failure, the secondary pressure solenoid valve 63 is erroneously determined to have a failure and a fail-safe control for double failure is possibly executed.

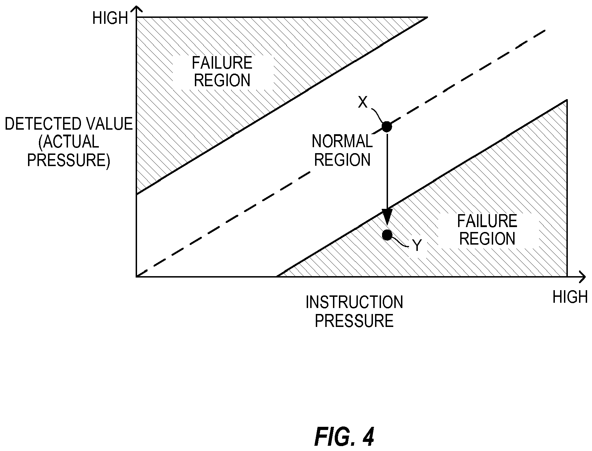

FIG. 4 illustrates the state in such case.

When the input rotation speed sensor 42 is determined to have a failure and the fail-safe control is executed, as described above, the respective line instruction pressure and secondary instruction pressure are set to the maximum pressures such that the output hydraulic pressures of the solenoid valves 61 and 63 relative to the input hydraulic pressures become the maximum to increase the line pressure PL and the secondary pressure Psec.

In this situation, if the rotation speed of the engine 1 lowers, a discharge amount of the oil pump 10 decreases and the amount of oil supplied to the secondary pulley 22 becomes insufficient, possibly the secondary pressure Psec failing to rise up to the secondary instruction pressure (the maximum pressure) (a point X → a point Y in the drawing).

For this reason, the detected value of the secondary pressure sensor 46 deviates from the secondary instruction pressure and the combination of the secondary instruction pressure and the detected value exits a normal region and enters the failure region; therefore, the normal secondary pressure solenoid valve 63 is also determined to have a failure.

When the secondary pressure solenoid valve 63 is also determined to have a failure subsequent to the input rotation speed sensor 42, the fail-safe control for double failure is executed. However, as described above, since the fail-safe control for double failure is the fail-safe control putting emphasis on safety, the fail-safe control for double failure largely affects the running performance and the execution of such control on the basis of the erroneous determination result is not preferable.

Therefore, when the transmission controller 12 determines that the input rotation speed sensor 42 has a failure, the transmission controller 12 inhibits the failure determination of the secondary pressure solenoid valve 63 on the basis of the difference between the secondary instruction pressure and the detected pressure.

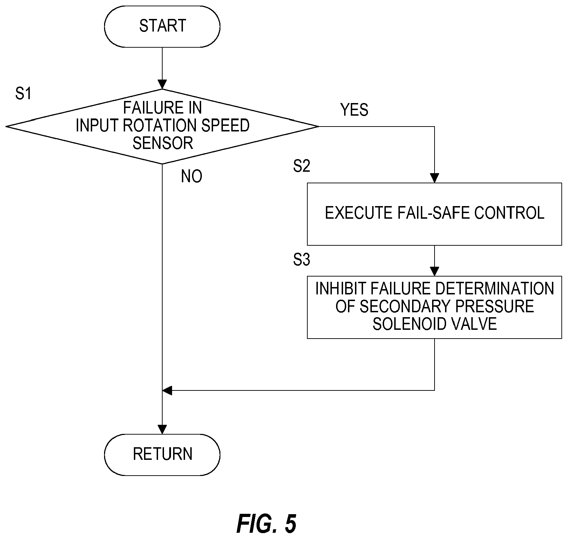

FIG. 5 illustrates a process content of the transmission controller 12 for such operation.

According to this, when the transmission controller 12 determines that the input rotation speed sensor 42 has a failure, the transmission controller 12 advances the process from Step S1 to Steps S2 and S3. Then, the transmission controller 12 executes the fail-safe control (the line instruction pressure, the secondary instruction pressure = maximum pressure) when the input rotation speed sensor 42 has a failure and inhibits the failure determination of the secondary pressure solenoid valve 63.

Thus, when the input rotation speed sensor 42 is determined to have a failure, the failure determination of the secondary pressure solenoid valve 63 is not performed; therefore, the secondary pressure solenoid valve 63 is not erroneously determined to have a failure while the secondary pressure solenoid valve 63 is normal.

Accordingly, the state is not determined as the double failure, the fail-safe control for double failure is not executed, the sub-transmission mechanism 30 is not fixed to the second speed, and the running performance does not largely lower.

It should be noted that the inhibition of the failure determination of the secondary pressure solenoid valve 63 while the input rotation speed sensor 42 has a failure is effective in a both-pressure-regulating CVT, which adjusts the primary pressure Ppri and the secondary pressure Psec by the solenoid valves 62 and 63 using the line pressure PL as the source pressure, like this embodiment. This is because, compared with a so-called one-side-pressure-regulating CVT in which the line pressure PL is directly supplied to the secondary pulley 22 as the secondary pressure Psec, it is difficult for a both-pressure-regulating CVT to increase only the secondary pressure Psec unilaterally since the secondary pressure solenoid valve 63 is interposed, thus, the above-described problem is likely to occur.

The transmission controller 12 executes the fail-safe control according to the failure site as described above. When an ignition key is operated to be off, the fail-safe control in execution is terminated at the timing. In the case where the ignition key is turned on again and the vehicle leaves again, whether the sensors, the solenoid valves, or similar devices have a failure or not is determined again. When it is determined again that a failure occurs, the fail-safe control is executed again.

This is because there may be a case where a failure has been solved at the time point at which the ignition key is turned on again. In this case, the execution of the unnecessary fail-safe control and deterioration of the running performance of the vehicle at restart can be prevented.

The embodiment of the present invention described above are merely illustration of one application example of the present invention and not of the nature to limit the technical scope of the present invention to the specific constructions of the above embodiment.

For example, while the embodiment sets the secondary instruction pressure when the input rotation speed sensor 42 is determined to have a failure to the maximum pressure, it is only necessary that the secondary instruction pressure is a predetermined high pressure at which the belt slip can be prevented; therefore, the secondary instruction pressure is not necessarily limited to the maximum pressure.

The present application claims a priority of Japanese Patent Application No. 2015-179520 filed with the Japan Patent Office on September 11, 2015, all the contents of which are hereby incorporated by reference.

## Claims

1. A belt continuously variable transmission comprising:
a secondary pressure regulating valve configured to adjust a secondary pressure supplied to a secondary pulley to be a secondary instruction pressure;
a secondary pressure sensor configured to detect the secondary pressure;
an input rotation speed sensor configured to detect an input rotation speed of the belt continuously variable transmission; and
a controller, wherein
the controller is configured to:
determine whether the input rotation speed sensor has a failure or not on the basis of a detected value by the input rotation speed sensor; and
if the input rotation speed sensor is determined to have a failure, execute a fail-safe control which sets the secondary instruction pressure to be a predetermined high pressure and inhibit a failure determination of the secondary pressure regulating valve on the basis of a difference between the secondary instruction pressure and a detected value by the secondary pressure sensor.

2. The belt continuously variable transmission according to claim 1, further comprising
a primary pressure regulating valve configured to adjust a primary pressure supplied to a primary pulley to be a primary instruction pressure, wherein
the primary pressure regulating valve and the secondary pressure regulating valve are pressure regulating valves respectively configured to adjust the primary pressure and the secondary pressure using an identical line pressure as source pressures.

3. The belt continuously variable transmission according to claim 1 or 2, further comprising
a sub-transmission mechanism that has a first gear position and a second gear position, the second gear position having a speed ratio smaller than the first gear position, wherein
the controller is further configured such that if the input rotation speed sensor and the secondary pressure regulating valve are determined to have a failure, the controller fixes the gear position of the sub-transmission mechanism to the second gear position.

4. The belt continuously variable transmission according to any one of claims 1 to 3, wherein
the controller is further configured such that if an ignition key turns off, the controller cancels the fail-safe control.

5. A failure determination method of a belt continuously variable transmission that includes a secondary pressure regulating valve configured to adjust a secondary pressure supplied to a secondary pulley to be a secondary instruction pressure, a secondary pressure sensor configured to detect the secondary pressure, and an input rotation speed sensor configured to detect an input rotation speed of the belt continuously variable transmission, the failure determination method comprising:
determining whether the input rotation speed sensor has a failure or not on the basis of a detected value by the input rotation speed sensor; and
if the input rotation speed sensor is determined to have a failure, executing a fail-safe control which sets the secondary instruction pressure to be a predetermined high pressure and inhibiting a failure determination of the secondary pressure regulating valve on the basis of a difference between the secondary instruction pressure and a detected value by the secondary pressure sensor.
